Europäisches Patentamt

European Patent Office

Office européen des brevets

(19)

(11) Veröffentlichungsnummer: **0 265 967 B1**

# EUROPÄISCHE PATENTSCHRIFT

(12)

(45) Veröffentlichungstag der Patentschrift: 06.03.91

(21) Anmeldenummer: 87115995.0

(22) Anmeldetag: 30.10.87

(51) Int. Cl.⁵: **B29C 47/08**, B08B 7/00

(54) **Vorrichtung zum Reinigen von sich drehenden Teilen von Kunststoffverarbeitungsmaschinen.**

(30) Priorität: 31.10.86 DE 3637070

(43) Veröffentlichungstag der Anmeldung:
04.05.88 Patentblatt 88/18

(45) Bekanntmachung des Hinweises auf die
Patenterteilung:
06.03.91 Patentblatt 91/10

(84) Benannte Vertragsstaaten:
AT BE CH FR GB IT LI NL SE

(56) Entgegenhaltungen:
DE-A- 2 320 556
DE-C- 3 611 113
FR-A- 2 174 684
US-A- 3 071 498
US-A- 4 004 787

PLAST VERARBEITER, Band 33, Nr. 10, Oktober 1982, Seite 1197, Speyer/Rhein, DE;
"Reinigungsmischungen für die PVC-Verarbeitung"

DRAHT, Band 34, Nr. 1, Januar 1983, Seiten 26-28, Bamberg, DE; E. KERTSCHER:
"Aufarbeiten und Kontrolle von Spritzwerkzeugen für die Kabelindustrie"

(73) Patentinhaber: **Caroline Christ, abgasfreie Werkzeugreinigungsapparate für die Kunststoffindustrie**
**Elsenheimerstrasse 2 a**
**W-8000 München 21(DE)**

(72) Erfinder: **Schmidt, Rudolf**
**Agnes-Bernauer-Strasse 69**
**W-8000 München 21(DE)**

(74) Vertreter: **Prietsch, Reiner, Dipl.-Ing. et al**
**Patentanwälte Dipl.-Ing. Dipl. oec. publ. D. Lewinsky, Dipl.-Ing. Reiner Prietsch Gotthardstrasse 81**
**W-8000 München 21(DE)**

## Beschreibung

Die Erfindung betrifft eine Vorrichtung der im Oberbegriff des Anspruches 1 angegebenen Art. Eine solche ist aus der DE-C-3309878 bekannt.

Bis heute ist es vielfach noch üblich, diejenigen Teile von Kunststoffverarbeitungsmaschinen wie etwa Spritz-Gießmaschinen oder Spritz-Blasmaschinen, an denen Reste des verarbeiteten Kunststoffs haften, durch Erhitzen mittels einer Flamme zu reinigen, uzw. entweder durch Wegbrennen der Kunststoffreste oder/und gleichzeitiges Abschaben der erweichten Kunststoffrückstände. Häufig leidet allerdings dabei die Oberflächenvergütung der betreffenden Teile.

Aus der DE-C-31 46 478 ist eine Reinigungsvorrichtung bekannt, die diesen Nachteil und die Entstehung schädlicher Kunststoff-Zersetzungsprodukte vermeidet. Diese Vorrichtung besteht aus einem geschlossenen, mit einer nicht aggressiven Reinigungsflüssigkeit gefüllten und beheizbaren Behälter, in den die betreffenden Teile eingelegt werden. Die Reinigungswirkung wird durch Erhitzung der Flüssigkeit bis auf oder knapp über den Schmelzpunkt des betreffenden Kunststoffs und gleichzeitige Anregung einer Schwingungsbewegung in der Flüssigkeit erzielt. Weiterhin ist aus der DE-C-33 09 878 eine im wesentlichen nach dem gleichen Prinzip arbeitende, jedoch speziell für die Reinigung von sperrigen Teilen wie etwa Extruderschnecken bestimmte Vorrichtung bekannt. Allerdings nimmt die Vorrichtung relativ viel Platz inanspruch, hat einen hohen elektrischen Anschlußwert zur Versorgung der notwendigen leistungsfähigen Heizung, bedarf gegebenenfalls auch eines Kühlmittelanschlusses und bedingt vor allem eine lange Zykluszeit infolge der Wärmeträgheit der Reinigungsflüssigkeit.

Der Erfindung liegt die Aufgabe zugrunde, eine Reinigungsvorrichtung speziell für sich drehende Teile von Kunststoffverarbeitungsmaschinen zu schaffen, die unter Beibehaltung der Vorteile der beiden beschriebenen, bekannten Vorrichtungen, nämlich einer verschleißarmen und abgasfreien Reinigung, einen einfacheren Aufbau hat, wenig Platz benötigt und eine schnellere Zykluszeit erlaubt.

Diese Aufgabe ist erfindungsgemäß durch Ausbildung der Reinigungsvorrichtung gemäß dem kennzeichnenden Teil des Patentanspruches 1 gelöst.

Überraschenderweise hat sich nämlich gezeigt, daß sich drehende Teile von Kunststoffverarbeitungsmaschinen auch "trocken" vollständig von anhaftenden Kunststoffresten befreien lassen, sofern man diese Teile unter ständiger nicht zu rascher Drehbewegung langsam in ein Pulver oder Granulat eintauchen läßt, das auf eine auf den jeweiligen Kunststoff abgestellte Temperatur erhitzt und nach Körnung und Abrasivität so ausgewählt ist, daß die Oberflächenvergütung der betreffenden Teile nicht leidet. Da der Innendurchmesser des rohrförmigen Behälters zur Aufnahme des zu reinigenden Teils nur wenig größer als der größte Druchmesser des zu reinigenden Teils sein muß und - im Gegensatz zu der aus der DE-PS 33 09 878 bekannten Vorrichtung - nicht gekippt oder geschwenkt werden muß, ist der Platzbedarf der hier vorgeschlagenen Vorrichtung gering. Da des weiteren das verwendete Pulver oder Granulat eine verhältnismäßig kleine Wärmekapazität hat und das Teil nach erfolgter Reinigung sofort aus dem rohrförmigen Behälter herausgefahren werden kann, verringert sich hierbei die Zykluszeit erheblich. Schließlich ist auch der Umgang mit dem Pulver oder Granulat, gewöhnlich ein Mineralstoff oder Mineralstoffgemisch, erheblich unproblematischer als mit einer speziellen Reinigungsflüssigkeit.

Nach einer bevorzugten Ausführungsform ist vorgesehen, daß der rohrförmige Behälter stehend und die Spannvorrichtung über diesem angeordnet ist. Auf diese Weise ist die Befüllung des rohrförmigen Behälters mit dem Pulver oder Granulat und die Entleerung desselben sehr einfach.

Die Beheizung des Behälters besteht am besten aus einer diesen umgebenden elektrischen Heizvorrichtung, die ihrerseits von einer Wärmeisolierung umgeben ist. Die Heizvorrichtung kann die Form eines den rohrförmigen Behälter konzentrisch umschließenden, weiteren Rohres haben, in das eine Heizspirale isoliert eingebettet ist.

Weiter empfiehlt es sich, die Spannvorrichtung an Führungssäulen zu führen. Man erreicht dadurch eine genau zentrische Ausrichtung auf die Mittelachse des rohrförmigen Behälters.

Der Drehantrieb der Spannvorrichtung besteht am besten aus einem reversierbaren Elektromotor mit Schneckengetriebe. Sofern es sich bei den zu reinigenden Teilen um Extruderschnecken handelt, dreht der Elektromotor diese entsprechend der Schneckensteigung während des Einführens und bis zum Ende des Reinigungsvorganges in der einen Drehrichtung, zum leichteren Herausfahren jedoch in der anderen Richtung.

Als Verschiebevorrichtung für die Spannvorrichtung ist eine doppelt wirkende Kolben/Zylinder-Einheit zweckmäßig. Beispielsweise eine Gewindespindel würde jedoch den gleichen Zweck erfüllen.

Bevorzugt wird weiterhin, daß der rohrförmige Behälter eine trichterförmige Einführöffnung für das zu reinigende Teil hat. Es hat sich nämlich gezeigt, daß die von dem zu reinigenden bzw. gereinigten Teil entfernten Kunststoffreste sich zumindest zum überwiegenden Teil im Bereich der Einführöffnung des rohrförmigen Behälters ansammeln. Die trichterförmige Ausbildung der Einführöffnung schafft ein ausreichendes Aufnahmevolumen für diese Kunststoffreste und ermöglicht deren bequeme Entfernung.

Da das Pulver oder Granulat, das die Füllung des rohrförmigen Behälters bildet, ebenfalls einem gewissen Verschleiß unterliegt, muß sie von Zeit zu Zeit ausgetauscht werden. Dieser Austausch läßt sich besonders leicht bewerkstelligen, wenn der Behälterboden aus einem Schieber besteht, unterhalb dessen ein Auffangbehälter angeordnet ist. Zusätzlich kann vorgesehen sein, den in Schließstellung den Behälterboden bildenden Teil des Schiebers siebartig auszubilden, wenn die Füllung des Behälters aus Granulat besteht. Staubförmiger Abrieb wird dann laufend bereits während des Reinigungszyklus in den Auffangbehälter abgeführt.

In der Zeichnung ist die Vorrichtung nach der Erfindung in einer beispielsweise gewählten Ausführungsform schemaschtisch vereinfacht dargestellt. Es zeigt:

Figur 1      eine gemäß der Linie I-I in Fig. 2 geschnittene Seitenansicht und

Figur 2      eine Frontansicht der Vorrichtung.

Die in der Zeichnung dargestellte Vorrichtung besteht aus einem kastenförmigen Untergestell 1 aus Stahlblech, in dem sich ein rohrförmiger Behälter 2 mit einer sich trichterförmig erweiternden oberen Öffnung 3 befindet. Die untere Öffnung des Behälters 2 ist durch einen Schieber 4 verschlossen. Der rohrförmige Behälter 2 und der Schieber 4 bestehen vorzugsweise aus Edelstahl. Der rohrförmige Behälter 2 ist von einem Heizrohr 5 umschlossen, in das eine Heizspirale 6 eingebettet ist, die über das angedeutete Kabel 7 an einen nicht dargestellten Schaltschrank angeschlossen ist. Eine hinreichend hitzebeständige Isolierung 8 beispielsweise aus Steinwolle umschließt das Heizrohr 5.

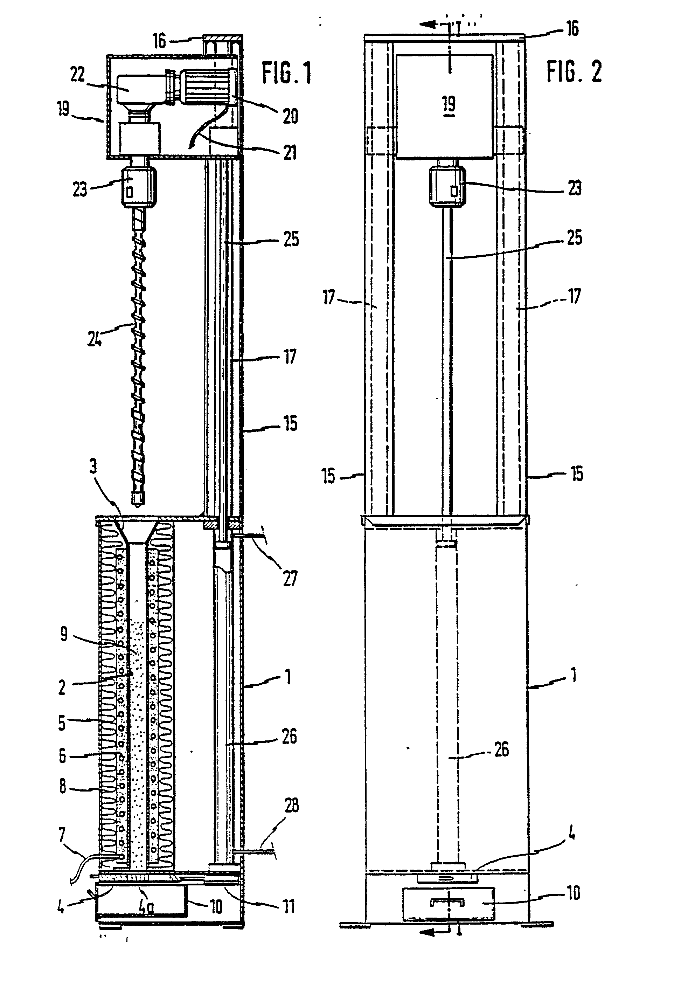

Der Behälter 2 ist bis zu einer von dem Volumen des zu reinigenden Werkstücks abhängigen Höhe mit einem leicht abrasiv wirkenden, hinreichend wärmebeständigen Granulat gefüllt. Als Beispiel kann ein Granulatgemisch aus ausgehärtetem Gips und ausgehörtetem Mörtel oder Bimssteingranulat, jeweils mit einer mittleren Körnung von ca. 0,5 mm bis ca. 4 mm genannt werden. Dieses Granulat kann über den Schieber 4 in einen darunter angeordneten Auffangbehälter 10 entleert werden. Staubförmige Anteile des Granulats 9 können jedoch auch in der gezeichneten Schließstellung des Schiebers 4 über dessen siebartig perforierten Teil 4a in den Auffangbehälter 10 gelangen. Da der Schieber 4 häufig sehr fest sitzt, ist ein kleiner Druckmittelzylinder 11 vorgesehen, mit dessen Hilfe der Schieber 4 zumindest ein kleines Stück in Richtung der Offenstellung verschoben wird. Der Schieber kann dann gewünschtenfalls von vorn, d.h. von links in Figur 1, vollständig von Hand herausgezogen werden.

Auf dem Unterteil 1 sind 2 U-profilförmige, senkrechte Träger 15 angeordnet, deren obere Enden durch eine Querstrebe 16 verbunden sind. Jeder der Träger 15 enthält eine Führungssäule oder ein Führungsrohr 17. Auf diesen Führungsrohren 17 läuft über Führungsbüchsen 18 ein Kopf 19. Der Kopf 19 enthält einen reversierbaren Elektromotor 20 mit Anschlußkabel 21, nachgeschaltetem Schneckengetriebe 22 und ein Spannfutter 23, in das das eine Ende einer zu reinigenden Extruderschnecke 24 eingespannt ist (in Figur 2 nicht dargestellt).

Mit dem Kopf 19 ist das Ende einer Kolbenstange 25 einer im Unterteil 1 stehend agebrachten, doppelt wirkenden Kolben/Zylinder-Einheit 26 verbunden. Die Kolben/Zylinder-Einheit 26 mit den angedeuteten Druckmittelanschlüssen 27 und 28 ermöglicht es , den Kopf 19 längs der Führungssäulen 17 auf und ab zu fahren.

Die Vorrichtung arbeitet ausgehend von der zeichnerisch dargestellten Stellung wie folgt, wobei die einzelnen Funktionen über den nicht dargestellten Schaltschrank, der jedoch beispielsweise im Unterteil 1 integriert sein kann, gesteuert werden:

Zunächst wird die Heizung (Heizrohr 5) eingeschaltet. Nach Erreichen einer vorgegebenen Temperatur, für deren Einhaltung ein nicht gezeichneter Thermostat sorgt, wird der Elektromotor 20 in einer der Steigung der Schneckenlinie der Extruderschnecke 24 entsprechenden Drehrichtung eingeschaltet. Das Schneckengetriebe 22 untersetzt die Drehzahl des Elektromotors 20 auf beispielsweise 40 bis 60 U/min. Die Kolben/Zylinder-Einheit 26 wird über den Anschluß 27 so mit Druckmittel beaufschlagt, daß sich der Kopf 19 langsam senkt, beispielsweise mit einer Geschwindigkeit von 1 m/min. Nach dem vollständigen Eintauchen zumindest des durch anhaftende Kunststoffreste verschmutzten Teils der Extruderschnecke 24 in den rohrförmigen Behälter 2 und das Granulat 9 kommt die Absenkbewegung des Kopfes 19 zum Stillstand, während das Spannfutter 23 die Extruderschnecke 24 weiterhin dreht. Nach einer durch einen Zeitgeber vorgegebenen Zeit, nach deren Ablauf die Extruderschnecke erfahrungsgemäß vollständig gereinigt ist, kehrt sich die Drehrichtung des Elektromotors 20 um. Gleichzeitig wird die Kolben/Zylinder-Einheit 26 über den Anschluß 28 mit Druckmittel beaufschlagt, so daß der Kopf sich wieder langsam nach oben bewegt, bis er seine obere Endstellung erreicht. Gleichzeitig wird die Heizung abgeschaltet. Damit ist der Reinigungszyklus beendet.

Wie bereits erwähnt, richtet sich die Temperatur, bis zu der das Granulat 9 aufgeheizt wird, nach der Art des zu entfernenden Kunststoffs. Als Beispiele können angegeben werden:

```
PVC hart        ca. 217°
PA              ca. 290° bis 300°
ABS                 300°
PC              ca. 320° bis 340°
```

Die jeweiligen Temperaturen sollen nicht überschritten werden um eine Zersetzung des Kunststoffs zu vermeiden. Die eingestellte Temperatur muß nicht unbedingt den Schmelzpunkt des jeweiligen Kunststoffs erreichen. Die Dauer des eigentlichen Reinigungsvorgangs richtet sich innerhalb gewisser Grenzen nach der Profilform, der Dicke und dem Verschmutzungsgrad des betreffenden Werkstücks. Zur Befreiung einer Extruderschnecke mit einem Durchmesser von 20 mm die mit PVC hart verklebt ist, werden ca. 10 Minuten benötigt.

**Ansprüche**

1. Vorrichtung zum Reinigen von sich drehenden Teilen von Kunststoffverarbeitungsmaschinen, z.B. Extruderschnecken, von anhaftenden Kunststoffresten,
   <u>gekennzeichnet durch</u>

   einen rohrförmigen beheizbaren Behälter (2), in den das zu reinigende Teil (24) von einer Stirnseite her einführbar ist,
   eine trockene Pulver- oder Granulatfüllung (9) in dem Behälter (2),
   eine außerhalb des Behälters (2) achs gleich zu diesem angeordnete Spannvorrichtung (23) für das zu reinigende Teil (24),

   einen Drehantrieb (20,22) für die Spannvorrichtung (23),
   eine Vorrichtung (25,26) zur Verschiebung der Spannvorrichtung (23) in der Achse des rohrförmigen Behälters (2).

2. Vorrichtung nach Anspruch 1, dadurch gekennzeichnet, daß der rohrförmige Behälter (2) stehend und die Spannvorrichtung (23) über diesem angeordnet ist.

3. Vorrichtung nach Anspruch 1 oder 2, dadurch gekennzeichnet, daß der rohrförmige Behälter (2) von einer elektrischen Heizvorrichtung (5,6) und diese von einer Wärmeisolierung (8) umgeben ist.

4. Vorrichtung nach einem der Ansprüche 1 bis 3, dadurch gekennzeichnet, daß die Spannvorrichtung (23) an Führungssäulen (17) geführt ist.

5. Vorrichtung nach einem der Ansprüche 1 bis 4, dadurch gekennzeichnet, daß der Drehantrieb der Spannvorrichtung aus einem reversierbaren Elektromotor (20) mit Schneckengetriebe (22) besteht.

6. Vorrichtung nach einem der Ansprüche 1 bis 5, dadurch gekennzeichnet, daß die Verschiebevorrichtung der Spannvorrichtung (23) aus einer doppelt wirkenden Kolben/Zylinder-Einheit (26) besteht.

7. Vorrichtung nach einer der Ansprüche 1 bis 6, dadurch gekennzeichnet, daß der rohrförmige Behälter (2) eine trichterförmige Einführöffnung (3) für das zu reinigende Teil (24) hat.

8. Vorrichtung nach einem der Ansprüche 1 bis 7, dadurch gekennzeichnet, daß der Behälterboden aus einem Schieber (4) besteht, unterhalb dessen ein Auffangbehälter (10) angeordnet ist.

**Claims**

4

1. Apparatus for cleaning rotating members of plastics processing machines, for example extruder screws, of plastics residues clinging thereto, characterised by:

a tubular heatable container (2) into which the member (24) to be cleaned can be introduced from one end,

a dry powder or granulate filling (9) in the container (2),

a clamping means (23) for the member (24) to be cleaned, the clamping means being arranged outside the container (2) coaxially therewith,

a rotary drive (20, 22) for the clamping means (23), and

a means (25, 26) for displacement of the clamping means (23) on the axis of the tubular container (2).

2. Apparatus according to claim 1 characterised in that the tubular container (2) is arranged in an upright position and the clamping means (23) is arranged above same.

3. Apparatus according to claim 1 or claim 2 characterised in that the tubular container (2) is surrounded by an electrical heating means (5, 6) and same is surrounded by a heat insulation (8).

4. Apparatus according to one of claims 1 to 3 characterised in that the clamping means (23) is guided on guide colunns (17).

5. Apparatus according to one of claims 1 to 4 characterised in that the rotary drive for the clamping means comprises a reversible electric motor (20) with worm drive (22).

6. Apparatus according to one of clams 1 to 5 characterised in that the displacement means for the clamping means (23) comprises a double-acting piston-cylinder unit (26).

7. Apparatus according to one of claims 1 to 6 characterised in that the tubular container (2) has a funnel-shaped entry opening (3) for the member (24) to be cleaned.

8. Apparatus according to one of claims 1 to 7 characterised in that the container bottom comprises a slider (4 ) beneath which is arranged a catch container (10).

**Revendications**

1. Dispositif pour nettoyer des pièces rotatives de machines de transformation de matières plastiques en les débarrassant de residus de matière plastique qui y adhèrent, caractérisé par

un récipient tubulaire chauffable (2) dans lequel la pièce à nettoyer (24) peut être introduite par un côté frontal,

un garnissage sec de poudre ou de granulé (9) dans le récipient (2),

un dispositif de serrage (23) pour ·la pièce à nettoyer (24), disposé en dehors du récipient (2) coaxialement avec celui-ci,

un mécanisme d'entraînement en rotation (20, 22) pour le dispositif de serrage (23),

un dispositif (25, 26) pour déplacer le dispositif de serrage (23) dans la direction axiale du récipient tubulaire (2).

2. Dispositif selon la revendication 1, caractérisé en ce que le récipient tubulaire (2) est debout et le dispositif de serrage (23) est disposé au-dessus de lui.

3. Dispositif selon la revendication 1 ou 2, caractérisé en ce que le récipient tubulaire (2) est entouré par un dispositif électrique chauffant (5, 6) et celui-ci est entouré par une isolation calorifuge (8).

4. Dispositif selon l'une quelconque des revendications 1 à 3, caractérisé en ce que le dispositif de serrage (23) est guidé sur des colonnes de guidage (17).

5. Dispositif selon l'une quelconque des revendications 1 à 4, caractérisé en ce que le mécanisme d'entraînement en rotation du dispositif de serrage est constitué par un moteur électrique réversible (20) avec un engrenage à vis sans fin (22).

6. Dispositif selon l'une quelconque des revendications 1 à 5, caractérisé en ce que le dispositif de déplacement du dispositif de serrage (23) est constitue par une unité (26) à piston et cylindre.

7. Dispositif selon l'une quelconque des revendications 1 à 6, caractérisé en ce que le récipient tubulaire (2) présente une ouverture d'introduction en forme d'entonnoir (3) pour la pièce à nettoyer (24).

8. Dispositif selon l'une quelconque des revendications 1 à 7, caractérisé en ce que le fond du recipient est constitué par un tiroir (4), au-dessous duquel est disposé un récipient collecteur (10).

EP 0 265 967 B1

FIG. 1

FIG. 2